Europäisches Patentamt

European Patent Office

Office européen des brevets

(19)

(11) Numéro de publication: **0 012 460**
**B1**

(12) **FASCICULE DE BREVET EUROPEEN**

(45) Date de publication du fascicule du brevet: **21.09.83**

(21) Numéro de dépôt: **79200689.2**

(22) Date de dépôt: **23.11.79**

(51) Int. Cl.³: **H 02 K 1/14, G 04 C 13/11, H 02 K 37/00**

(54) **Stator monobloc pour moteur pas à pas d'horlogerie.**

(30) Priorité: **06.12.78 CH 12473/78**

(43) Date de publication de la demande:
**25.06.80 Bulletin 80/13**

(45) Mention de la délivrance du brevet:
**21.09.83 Bulletin 83/38**

(84) Etats contractants désignés:
**DE FR GB**

(56) Documents cités:
**DE - A - 2 559 635**
**DE - A - 2 611 319**
**GB - A - 1 457 676**
**GB - A - 1 459 981**
**GB - A - 1 531 314**
**GB - A - 2 010 593**
**US - A - 1 495 827**
**US - A - 3 256 453**
**US - A - 3 457 445**

(73) Titulaire: **Eta A.G. Ebauches-Fabrik**
**Schildruststrasse 17**
**CH-2540 Grenchen (Canton de Soleure) (CH)**

(72) Inventeur: **Bischof, Grégor**
**Alpenstrasse 50**
**CH-2540 Granges (Soleure) (CH)**
Inventeur: **Perucchi, Norberto**
**Chemin chair d'âne 18**
**CH-2072 St. Blaise (Neuchâtel) (CH)**
Inventeur: **Perrot, Friedrich**
**Rolliweg 78**
**CH-2543 Lengnau (Berne) (CH)**

(74) Mandataire: **Bovard, Fritz Albert et al,**
**Bovard & Cie Ingénieurs- Conseils ACP et Avocats**
**Optingenstrasse 16**
**CH-3000 Berne 25 (CH)**

Courier Press, Leamington Spa, England.

## Stator monobloc pour moteur pas à pas d'horlogerie

La présente invention a pour objet un stator monobloc pour moteur pas à pas d'horlogerie comportant une plaque allongée en un matériau ferromagnétique qui présente un ouverture centrale pour le rotor du moteur, cette ouverture étant bordée par deux zones polaires massives et par deux zones de liaison étroites.

La construction des moteurs pas à pas d'horlogerie subit une évolution rapide. Des moteurs de ce genre sont utilisés dans les montresbracelet à quartz et affichage à aiguilles et leur réalisation doit satisfaire à des contraintes toujours plus serrées. Non seulement les impulsions de courant doivent provoquer la rotation du rotor avec un rendement aussi bon que possible, mais il faut en outre que l'ensemble de la construction soit de dimensions suffisamment réduites pour que les dimensions de la montre satisfassent elles-mêmes aux normes imposées à ces objets. On sait en particulier que l'on tend actuellement à réaliser des montresbracelet à quartz dont l'épaisseur est toujours plus réduite et cette exigence se reporte sur les moteurs. Par ailleurs, ceux-ci doivent être de construction simple et susceptibles d'être fabriqués en grande série par des moyens rationnels.

Le brevet anglais GB—A—1 459 981 décrit des moteurs pas à pas destinés à des montresbracelet de construction compacte. Pour faciliter le montage et l'ajustage des pièces, les zones polaires qui entourent le rotor sont reliées l'une à l'autre par leurs becs, de sorte que le stator est formé en une seule pièce avec des zones de liaison étroites entre les zones polaires. Pour que le rendement d'un tel moteur atteigne une valeur acceptable il faut que la section des zones de liaison soit suffisamment réduite pour qu'au moment des impulsions, le matériau soit saturé. Toutefois, ceci conduit à des réductions de section très importantes dans les zones de liaison et la rigidité de la pièce statorique n'est alors plus suffisante pour assurer une fabrication rationnelle. Dans le brevet susmentionné, on a prévu, pour remédier à cet inconvénient, d'intercaler la pièce statorique entre deux plaques qui ne font pas partie du stator et qui portent les paliers du rotor. L'ensemble est fixé aux extrémités du noyau portant la bobine.

Des dispositions analogues sont également connues par le brevet GB—A—1 531 314 et la demande de brevet DE—A—25 59 635.

Toutefois, il est préférable que le moteur pas à pas d'une montre à quartz soit directement intégré au mouvement. Ainsi, dans la publication de demande en Angleterre GB—A—2 010 593 est décrit un moteur miniature de type pas à pas qui comporte un stator monobloc mais composite. Ce stator monobloc est fixé directement sur la platine du mouvement et le rotor du moteur pivote entre un palier fixé également à la platine, dans un noyure de cette dernière et un second palier solidaire du pont de rouage. Ainsi, l'ensemble du rouage, y compris le pignon rotor, est supporté entre ce pont et la platine.

Cette construction exige toutefois que la pièce statorique soit suffisamment rigide pour pouvoir être manipulée seule lors du montage. Dans le demande de brevet précitée, la rigidité nécessaire est conférée à cette pièce, grâce à la constitution composite prévue.

Toutefois, si on désire éviter les complications de cette constitution composite, et réduire le flux de fuite en provoquant la saturation dans les zones de liaison par réduction de leur section, on est conduit, dans le cas d'une réalisation où le rotor a un diamètre de l'ordre de 1,5 mm, à réduire la largeur des zones de liaison à une valeur de 0,05 à 0,07 mm pour une épaisseur de stator de 0,7 mm par exemple, de sorte que la rigidité n'est alors plus suffisante.

La présente demande a pour but de résoudre ce problème.

On connaissait déjà par le brevet US—A—3 457 445 une construction de moteur électrique à stator feuilleté comprenant sur chaque tôle du stator des isthmes étampés ayant donc une épaisseur réduite et reliant deux zones de chaque tôle qui jouent le rôle des pièces polaires. La réalisation de ces isthmes d'épaisseur réduite entraînait naturellement une réduction importante du moment de résistance de chaque tôle. Toutefois, comme il ne s'agissait pas de moteurs aussi miniaturisés que ceux qu'on utilise, notamment dans les montresbracelet, l'épaisseur restante des tôles individuelles restait suffisante pour permettre leur manipulation sans risque de détérioration. Une fois l'empilage réalisé, les isthmes d'epaisseur réduite laissaient apparaître entre les tôles des ouvertures de faible hauteur.

Cette réalisation ne suggérait pas la solution apportée par la présente invention au problème exposé plus haut.

Cette solution consiste, suivant l'invention, en ce que la plaque est en une pièce faite d'un seul matériau et en ce que, afin d'obtenir un rapport maximal entre le moment de résistance et la section. Les zones de liaison présentent chacune un évidement usiné dans leur épaisseur.

On va décrire ci-après, à titre d'exemple, et en se référant au dessin annexé, quelques formes de réalisation de l'objet de l'invention.

La fig. 1 est une vue en coupe montrant la disposition générale d'un moteur utilisant le stator selon l'invention,

les fig. 2 et 2a sont des vues respectivement en élévation et en plan d'une première forme de réalisation représentée schématiquement,

la fig. 3 est une vue en élévation partielle fortement agrandie du stator de la fig. 2 montrant la répartition des forces en cas d'effort de flexion,

la fig. 4 est une vue en plan de dessus à échelle agrandie, montrant une partie du stator d'une seconde forme d'exécution,

les fig. 5, 6 et 7 sont des vues en plan de dessus partielles de trois autres formes d'exécution du stator selon l'invention, et

la fig. 8 est une vue en coupe partielle agrandie selon la ligne VIII—VIII de la fig. 7.

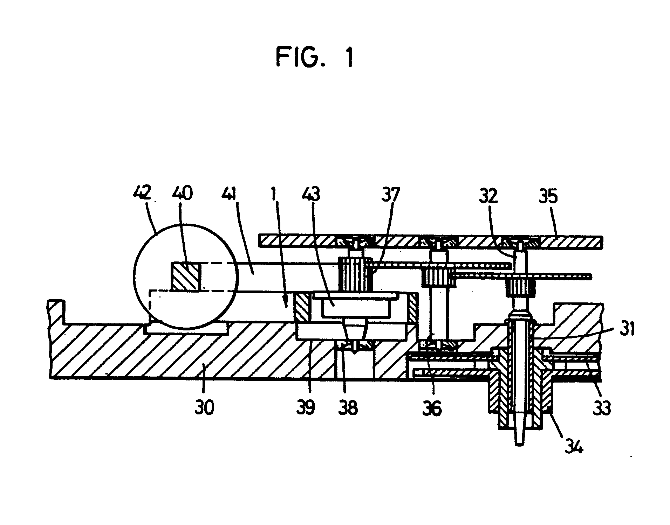

La fig. 1 montre la disposition générale d'un moteur pas à pas utilisant un stator qui constitue une forme d'exécution de l'invention dans une montre-bracelet à affichage à aiguilles de faible épaisseur. Le mouvement de la montre-bracelet comporte comme pièce principale une platine 30. Cette platine porte en son centre un tube 31 qui guide un mobile des secondes central 32 ainsi qu'un mobile de centre 33 engagé sur ce tube. Indirectement, le tube guide aussi une roue des heures 34 engagée sur le canon du mobile de centre. La roue des heures et le mobile de centre sont logés dans une creusure de la face supérieure de la platine, tandis que le mobile des secondes 32 est engagé entre la platine et un pont de rouage 35 fixé à la platine par des moyens usuels. Le rouage comporte encore un mobile intermédiaire 36 et un pignon rotor 37. Ces deux mobiles pivotent entre des paliers supportés par la platine 30 et par le pont 35. En particulier, le palier 38 qui supporte le pignon rotor 37 est fixé dans le fond d'une creusure 39 que présente la platine.

Le moteur pas à pas qui entraîne le rouage, comporte un noyau allongé 40 dont les extrémités présentent des pattes de liaison 41 et dont la partie centrale porte une bobine 42.

Les pattes de liaison 41 sont liées au stator 1. Cette pièce est montée directement sur la platine 30 de façon que sa partie centrale se trouve au dessus de la creusure 39. Elle est fixée à la platine et les pattes de liaison 41 reposent sur elle et sont rendues solidaires de la platine par son intermédiare.

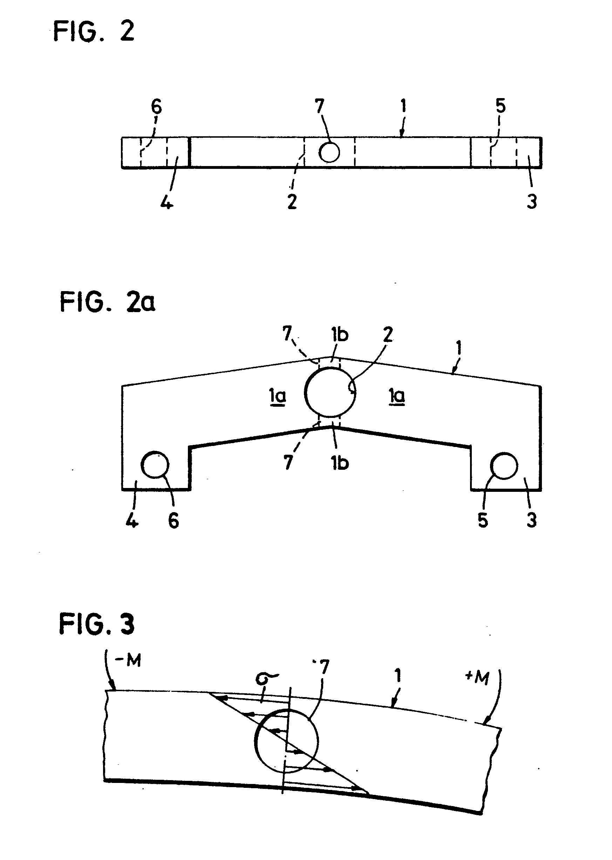

Les fig. 2 et 2a montrent l'allure générale du stator 1. Celui-ci est constitué par une plaque de métal ferro-magnétique, par exemple de fer à forte perméabilité. Cette plaque 1, de forme allongée, présente une ouverture centrale découpée 2 destinée à recevoir la partie 43 du pignon rotor 37, qui forme le rotor proprement dit et qui est constituée en un matériau à forte rémanence, aimanté diamétralement. A ses deux extrémités, le stator 1 comporte des prolongements 3 et 4 percés d'ouvertures 5 et 6 destinées à permettre la fixation du stator 1 et des deux extrémités du noyau magnétique 40 sur la platine 30.

L'ouverture 2 est représentée ici avec une forme circulaire. Toutefois, il est bien entendu qu'elle aura de préférence une forme légèrement différente d'un cercle présentant un axe de symétrie qui fixe la position de repos du rotor 43 entre les impulsions.

La région centrale de la plaque 1 comporte deux zones polaires désignées par 1a qui sont situées vis-à-vis l'une de l'autre dans le sens de la longueur de la pièce 1 et deux zones de liaison 1b par lesquelles les becs homologues des deux zones polaires 1a sont reliés l'un à l'autre de façon que la pièce 1 forme un corps solide et rigide.

Pour permettre, non seulement la manipulation de la pièce 1 lors du montage, mais également le découpage précis de l'ouverture 2 et des bords longitudinaux de la pièce 1, la section des zones de liaison doit présenter une certaine rigidité. Toutefois, comme on l'a vu plus haut, il est également nécessaire que cette section soit suffisamment réduite pour qu'elle se sature fortement sous l'effet du flux magnétique qui la traverse, au moment des impulsions. Dans le stator représenté aux fig. 2 et 2a, les deux exigences contradictoires sont satisfaites par le fait que des forures 7 coaxiales sont pratiquées dans l'épaisseur des zones 1b. Comme on le voit à la fig. 2, ces forures sont cylindriques et elles sont orientées radialement par rapport à l'ouverture 2.

La fig. 3 montre l'effet des forures 7. Lorsque la plaque 1 est soumise à un effort de flexion, on sait que la matériau qui la constitue subit des efforts de traction et de compression qui se répartissent comme le montre le diagramme formé par les flèches $\sigma$ à la fig. 3. Les efforts de traction ou de compression sont maximaux à la limite supérieure et à la limite inférieure du profil et, dans l'épaisseur de ce dernier, ils varient linéairement. Si donc, on perce un trou, comme le trou 7, dans l'épaisseur du profil de la plaque 1, la matière qui est enlevée est une matière faiblement sollicitée lors d'un effort de flexion. La résistance à la flexion n'est donc partiquement pas diminuée, tandis que la section de matière restante peut être assez fortement diminuée. Dans une plaque mesurant par exemple 0,7 mm d'épaisseur, on peut prévoir des zones de liaison 1b ayant chacune par exemple 0,2 à 0,3 mm de largeur et prévoir dans l'épaisseur de la plaque des trous 7 de 0,2 mm de diamètre. La résistance du profil à la flexion est donc assurée par deux éléments de paroi qui ont chacun 0,2 à 0,3 mm de largeur et environ 0,25 d'épaisseur et qui sont distants l'un de l'autre de 0,2 mm. Le moment de résistance de ce profil est suffisant pour que la pièce résiste aux efforts de flexion.

Pour percer les trous 7, on peut s'y prendre de différentes manières. Toutefois, i'expérience a montré que le perçage au moyen d'un rayon laser permettait de travailler efficacement et rapidement. Le perçage au laser a en outre l'avantage que les parois internes des forures subissent un cycle thermique très rapide au moment du perçage. La structure métallographique du matériau se modifie et suivant le type de matériau que l'on utilise, on peut obtenir une augmentation de la résistance mécanique du matériau et une diminution de sa perméabilité magnétique.

Toutefois, le perçage au moyen d'une mèche, suivi le cas échéant, d'un repassage destiné à éliminer les bavures, donne également de bons résultats. Cette opération de repassage pourrait être faite au moyen d'un laser.

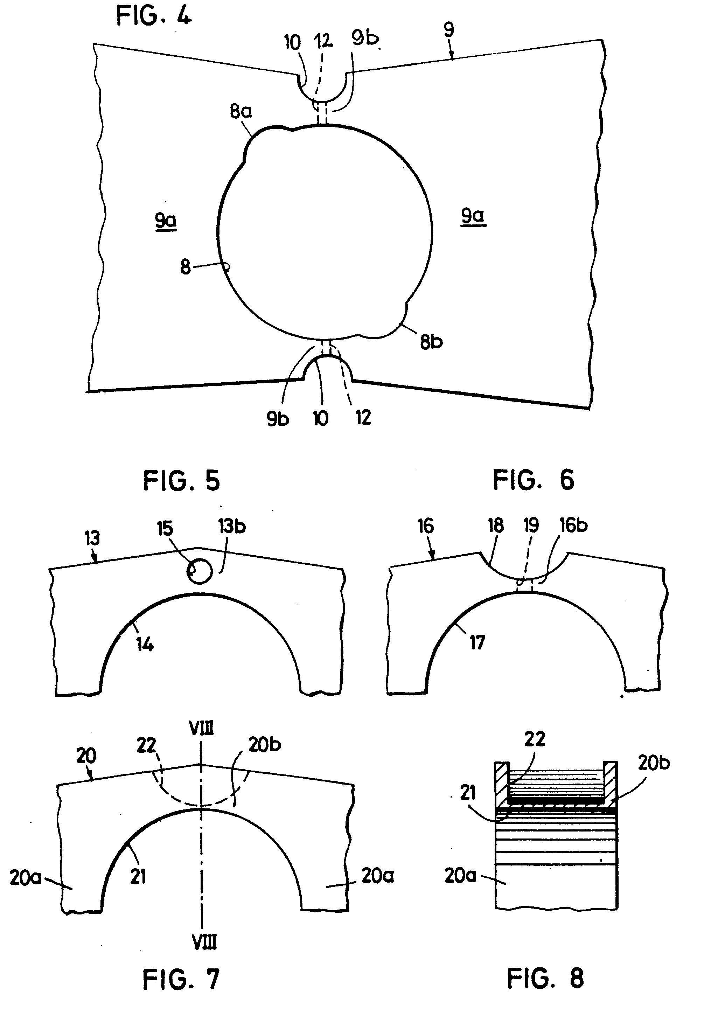

La fig. 4 représente à plus grande échelle une forme d'exécution dans laquelle l'ouverture 8 ménagée dans la plaque 9 pour permettre la mise en place du rotor a une forme exactement circulaire avec toutefois deux alvéoles diamétralement opposés 8a et 8b. Les bords longitudinaux externes de la pièce 9 sont ici légèrement divergents de part et d'autre de l'ouverture 8. Ils présentant deux échancrures en arc de cercle de petit diamètre 10 qui réduisent la largeur des zones de liaison 9b. Le cas échéant, ces zones de liaison peuvent être de largeur légèrement différentes. Les deux zones de liaison 9b sont percées de forures radiales 12 analogues aux forures 7, de sorte que les extrémités des zones polaires 9a de la pièce 9 ne se rejoignent que par une section de matière très réduite répartie de façon que le moment de résistance total soit aussi grand que possible et que, par conséquent, la résistance aux efforts de flexion soit assurée. Les alvéoles 8a et 8b définissent un axe de symétrie de l'ouverture 8 qui s'étend obliquement par rapport à l'axe commun des forures 12. Ces aléoles déterminent la position de repos du rotor.

Les fig. 5 et 6 montrent deux autres dispositions possibles pour les forures prévues dans les zones de liaison. Le stator 13 (fig. 5), pourvu de l'ouverture 14, présente des forures 15 qui sont parallèles à l'axe de l'ouverture 14 et qui traversent la plaque 13 dans toute son épaisseur. Les deux faces de cette plaque seront planes et parallèles comme le sont les faces des pièces 1 et 9. Le diamètre des forures 15 et la largeur des segments restants dans les zones de liaison 13b seront du même ordre de grandeur que dans le cas de la plaque 1.

La fig. 6 représente une variante de la fig. 4. La plaque statorique 16 pourvue de l'ouverture 17 présente des échancrures de large rayon 18 sur les bords externes de sa partie centrale afin de réaliser des zones de liaison 16b dont la largeur se réduit progressivement. Dans la partie la plus étroite de ces zones de liaison, des forures 19, analogues aux forures 7 et 12, sont prévues dans le sens radial. D'autre part, les bords opposés de la pièce statorique sont convergents.

Les fig. 7 et 8 représentent une forme d'exécution dans laquelle, au lieu de forures traversant les zones de liaison de part en part, on a prévu des échancrures susceptibles d'être réalisées par exemple par fraisage. La pièce statorique 20, de même forme que la pièce 1, et pourvue de l'ouverture centrale 21, présente dans les faces externes des zones de liaison 20b des logements 22 en forme de demi-lune ménagés dans l'épaisseur de la pièce 20. Ces logements peuvent être réalisés par fraisage ou par d'autres méthodes. Dans la zone de liaison 20b, la matière qui relie les extrémités des zones polaires 20a a donc une section en forme de C, ce qui lui confère également un moment de résistance élevé avec une section minimum.

Les différentes formes d'exécution décrites ci-dessus ont toutes pour avantage de constituer des stators monoblocs en une pièce qui peuvent être fabriqués par des méthodes rationnelles sans risques de détérioration ou de déformation permanente sur le pourtour des ouvertures centrales, de sorte que la haute précision que les entrefers doivent présenter est atteinte. En outre, ces stators peuvent être manipulés et montés facilement en évitant toute déformation à ce stade. Le métal des pièces statoriques peut être n'importe lequel des métaux à haute perméabilité utilisés pour la fabrication des moteurs pas à pas d'horlogerie. L'expérience a montré que l'usinage des évidements prévus dans les zones de liaison ne présentait pas de difficultés pratiques qui s'opposent à une exécution en grandes séries.

## Revendications

1. Stator monobloc pour moteur pas à pas d'horlogerie comportant une plaque (1; 9; 13; 16; 20) allongée en un matériau ferromagnétique qui présente une ouverture centrale (2; 8; 14; 17; 21) pour le rotor (43) du moteur, cette ouverture étant bordée par deux zones polaires massives (1a; 9a; 20a) et par deux zones de liaison (1b; 9b; 13b; 16b; 20b) étroites, caractérisé en ce que la plaque (1; 9; 13; 16; 20) est en une pièce faite d'un seul matériau et en ce que, afin d'obtenir un rapport maximal entre le moment de résistance et la section, les zones de liaison (1b; 9b; 13b; 16b; 20b) présentent chacune un évidement usiné (7; 12; 15; 19; 22) dans leur épaisseur.

2. Stator selon la revendication 1, caractérisé en ce que ledit évidement d'une zone de liaison (1b; 9b; 16b) est une forure (7; 12; 19) orientée radialement par rapport à ladite ouverture centrale (2; 8; 17).

3. Stator selon la revendication 2, caractérisé en ce que les dites forures (7; 12; 19) sont coaxiales.

4. Stator selon la revendication 2, caractérisé en ce que les dites forures (12; 19) débouchent, d'un côté, dans une échancrure (10; 18) que présente la face latérale externe de la zone de liaison (9b; 16b) et, de l'autre côté, dans ladite ouverture centrale (8; 17).

5. Stator selon la revendication 1, caractérisé en ce que ledit évidement d'une zone de liaison (13b) est une forure (15) d'axe parallèle à celui de l'ouverture centrale (14).

6. Stator selon la revendication 1, caractérisé en ce que ledit évidement d'une zone de liaison (20b) est ménagé à partir de la face latérale externe de cette dernière.

7. Stator selon la revendication 1, caractérisé en ce que la matériau de ladite plaque (1; 9; 13; 16; 20) présente une structure ayant une perméabilité magnétique réduite dans les zones de liaison (1b; 9b; 13b; 16b; 20b) et au voisinage des évidements (7; 12; 15; 19; 22).

## Patentansprüche

1. Einstückiger Stator für einen Uhren-Schrittmotor mit einer länglichen Platte (1; 9; 13; 16; 20) aus einem ferromagnetischen Material, die eine zentrale Oeffnung (2; 8; 14; 17; 21) für den Rotor (43) des Motors aufweist, wobei die genannte Oeffnung durch zwei massive polare Zonen (1a; 9a; 20a) und zwei schmale Verbindungszonen (1b; 9b; 13b; 16b; 20b) begrenzt ist, dadurch gekennzeichnet, dass die Platte (1; 9; 13; 16; 20) ein aus einem einzigen Material hergestelltes Stück ist und dass zum Erhalten eines maximalen Verhältnisses zwischen dem Widerstandsmoment und dem Querschnitt je der Verbindungszonen (1b; 9b; 13b; 16b; 20b) eine in ihre Dicke eingearbeitete Ausnehmung (7; 12; 15; 19; 22) aufweist.

2. Stator nach Anspruch 1, dadurch gekennzeichnet, dass die genannte Ausnehmung in der Verbindungszone (1b; 9b; 16b) eine bezüglich der zentralen Oeffnung (2; 8; 17) radial verlaufende Bohrung (7; 12; 19) ist.

3. Stator nach Anspruch 2, dadurch gekennzeichnet, dass die genannten Bohrungen (7; 12; 19) bezüglich einander koaxial sind.

4. Stator nach Anspruch 2, dadurch gekennzeichnet, dass die genannten Bohrungen (12; 19) einerseits in einen Ausschnitt (10; 18) auf der Aussenseite der Verbindungszone (9b; 16b) und andererseits in die genannte zentrale Oeffnung (8; 17) münden.

5. Stator nach Anspruch 1, dadurch gekennzeichnet, dass die genannte Ausnehmung in der Verbindungszone (13b) eine Bohrung (15) ist, deren Achse parallel zu jener der zentralen Oeffnung (14) verläuft.

6. Stator nach Anspruch 1, dadurch gekennzeichnet, dass die genannte Ausnehmung in der Verbindungszone (20b) ausgehend von der äusseren Seitenfläche in die Zone eingearbeitet ist.

7. Stator nach Anspruch 1, dadurch gekennzeichnet, dass das Material der genannten Platte (1; 9; 13; 16; 20) eine Struktur mit einer reduzierten magnetischen Permeabilität in den Verbindungszonen (1b; 9b; 13b; 16b; 20b) und in der Nachbarschaft der Ausnehmungen (7; 12; 15; 19; 22) aufweist.

## Claims

1. One-piece stator for a timepiece stepping motor comprising an elongated plate (1; 9; 13; 16; 20) of a ferromagnetic material having a central aperture (2; 8; 14; 17; 21) for the rotor (43) of the motor, this aperture being bordered by two solid polar zones (1a; 9a; 20a) and by two narrow connecting zones (1b; 9b; 13b; 16b; 20b;), characterized in that the plate (1; 9; 13; 16; 20) is in one piece made of a single material and in that, in order to obtain a maximum ration between the moment of resistance and the cross-section, the connecting zones (1b; 9b; 13b; 16b; 20b) each have a machined hollow (7; 12; 15; 19; 22) in their thickness.

2. Stator according to claim 1, characterized in that said hollow of a connecting zone (1b; 9b; 16b) is a bore (7; 12; 19) oriented radially relative to said central aperture (2; 8; 17).

3. Stator according to claim 2, characterized in that the said bores (7; 12; 19) are coaxial.

4. Stator according to claim 2, characterized in that the said bores (12; 19) open out, on one side, into a notch (10; 18) in the outer side face of the connecting zone (9b; 16b) and, on the other side, into said central aperture (8; 17).

5. Stator according to claim 1, characterized in that said hollow of a connecting zone (13b) is a bore (15) having its axis parallel to that of the central aperture (14).

6. Stator according to claim 1, characterized in that said hollow of a connecting zone (20b) is contrived starting from the outer side face of the latter.

7. Stator according to claim 1, characterized in that the material of said plate (1; 9; 13; 16; 20) exhibits a structure having a reduced magnetic permeability in the connecting zones (1b; 9b; 13b; 16b; 20b) and in the vicinity of the hollows (7; 12; 15; 19; 22).

# FIG. 1

FIG. 2

FIG. 2a

FIG. 3

# FIG. 4

# FIG. 5

# FIG. 6

# FIG. 7

# FIG. 8